# EUROPEAN PATENT SPECIFICATION

(11) **EP 0 574 899 B1**
(45) Date of publication and mention of the grant of the patent: **03.09.1997**
(21) Application number: 93109628.3
(22) Date of filing: 16.06.1993
(51) Int. Cl.: H02B 1/00, H01R 11/14, H01R 4/66

(54) **Pliers for devices to operate from the soil the short-circuiting and grounding of mean-voltage overhead electric lines**
Zangen für Vorrichtungen zum Kurzschliessen und Erden vom Boden aus von elektrischen Mittelspannungs-Freiluftleitungen
Pinces pour des dispositifs pour court-circuiter et relier à la terre des lignes aériennes à tension moyenne

(30) Priority: 17.06.1992 IT MI921485
(43) Date of publication of application: 22.12.1993
(73) Proprietor: SICAME ITALIA S.r.l., I-20090 Pieve Emanuele, Milano (IT)
(72) Inventor: Di Giovanni, Giuliano, I-20139 Milano (IT)
(74) Representative: Faggioni, Marco, Dr. Ing.

(56) References cited:
- DE-A- 2 301 334
- DE-B- 1 615 996
- DE-U- 7 812 209

## Description

The present invention concerns pliers for devices to operate from the soil the short-circuiting and grounding of mean-voltage overhead electric lines, and particularly pliers of this type apt to short-circuit currents of high amperage without causing the release or sparkings of the pliers.

As known, the short-circuiting and grounding of overhead electric lines is a preliminary condition - after having disconnected the line section concerned and checked that there is no tension thereon - to be able to proceed with maintenance operations on such lines. The short-circuiting and grounding devices for mean-voltage electric lines thus represent an indispensable basis for the operating safety against electrocution risks.

In fact, the short-circuiting and grounding of overhead conductors is meant, in the first place, to eliminate any tensions which may be present thereon, due to phenomena of induction from neighbouring electric installations. In the second place, it is meant to discharge to earth the currents which would develop in the conductors in the event that, due to a wrong manoeuvre, the tension should be accidentally restored on the line while the same is being worked on.

In this last case, the short-circuiting and grounding devices must:
- be apt to withstand the high currents which would be running through said devices (which might even reach several thousands of amperes);
- show very low contact resistances, so as to prevent the arising of currents on the conductors, which would be dangerous for the operators contacting the same.

The first of the two aforementioned conditions depends exclusively on the proper dimensioning of the short-circuiting and grounding devices; the second one is instead notably influenced, at present, also by the superficial state of the conductors to which the short-circuiting pliers are connected. In fact, after their installation, an oxide layer rapidly forms onto the surface of said conductors, causing a high increase of the contact resistance.

The short-circuiting and grounding of electric conductors of mean-voltage overhead electric lines is at present carried out by means of devices comprising a plurality of pliers, apt to clamp said conductors. Each pair of pliers is connected, by means of insulated copper wires, to a ground conductor which has been previously connected to one or more ground plates.

The pliers known in technique for this short-circuiting operation can substantially be divided into two types. A first type, called gravity pliers, comprises a fixed jaw ending with a narrow channel, into which fits the conductor when the pliers embrace the same. The contact between the pliers and the conductor is exclusively obtained thanks to the weight and configuration of the device, and the highest short-circuiting current allowed for these pliers is approximately 8 kA - 1 s on the new, and thus non-oxidized, conductors. If higher currents are fed to the conductor, or if its surface should be oxidized, considerable sparkings occur between the pliers and the conductor, which are apt to determine the release of the pliers from the conductor or, viceversa, the fusion of the pliers with said conductor, with serious consequences for the safety of the operators and for the integrity of the conductor (as well as, of course, for the integrity of the pliers).

This type of pliers - mounted at the end of a first telescopic metal rod, which is in turn supported by a second insulating rod, commonly called switch hook - is prevalently used for the grounding of electric lines operated from the soil.

A second type of pliers, called snap pliers, comprises a movable jaw which closes automatically under the action of a spring when the electric conductor, having reached the bottom of the undercut of said pliers, bears against a pawl which actually releases the action of the spring. The contact between the pliers and the conductor is obtained, in such pliers, thanks to the thrusting action of the spring, which thus determines a far steadier and stronger clamping action - in respect of that which can be obtained with the pliers of the heretofore mentioned type - and, furthermore, an impact effect on the conductor, caused by the snapping of the movable jaw as the same closes up. Said impact effect is particularly useful when having to short-circuit oxidized conductors (which is what practically happens in the normal operating conditions). In fact, for this purpose, the clamping surfaces of the jaw are formed with serrations or ribbings which, during impact, penetrate into the superficial oxide layer of the conductor, creating a perfect electric contact between the pliers and the conductor, independently from the conditions of surface oxidation of said conductor. The maximum short-circuiting current strength for this type of pliers - thanks to its special mechanical characteristics - is 12,5 kA - 0,3 s. An example of pliers of the kind described above is disclosed in DE-U-7812209.

The efficiency of the aforementioned second type of pliers is however limited by the fact that, in order to be able to operate with said pliers - and, in particular, to recover them from the conductors at the end of the maintenance operations on the line - it is necessary to be close to the conductors and thus, normally, to be standing on a ladder leaning against one of the poles or supports of the line. In fact, to allow their recovery, the pliers of known technique comprise, in their top part, a ring which is hooked by the operator onto the free end of an insulating switch hook; by imparting a pull on the switch hook, the pliers first of all swing on the conductor, turning over by approximately 180°, and then release the same. Of course, this ring hooking operation requires extreme precision and can thus be carried out only at a short distance from the conductor, namely - as seen - on one of the supports of the line. The release of the pliers with no turnover - that is, -with a direct upward movement of said pliers, as in the case of the first type of pliers described heretofore (which can in theory be carried out also from the soil) - would turn out to be dangerous or extremely difficult, due to the scarce resistance of the conductor to any upward movements.

The short-circuiting and grounding of conductors, operated from the supports of the line, has however the undoubted drawback - in respect of the short-circuiting operated from the soil - of allowing to perform such operations exclusively in correspondence of the supports, when instead, other positions along the line would often be more convenient or prove more efficacious.

The object of the present invention is to thus supply a new type of pliers for the short-circuiting of overhead electric lines, which provides all the advantages of the aforedescribed snap pliers, but which can be applied on a conductor, or removed therefrom, directly from the soil.

According to the present invention, said object is reached by means. of pliers for devices to effect from the ground the short-circuiting and grounding of conductors of overhead electric lines, said pliers comprising a pliers body (1), a movable jaw (3) which closes automatically when bearing against the conductor (C), whereby the clamping of the pliers to the conductor (C) is obtained by a pulling force directed downwards, and further comprising a support rod (8) for supporting the pliers, characterized in that
a) the support rod (8) is connected to the pliers body (1) in at least two points, of which a first point of permanent anchorage consists of a hinge (9-10), at least a second point consists of a coupling (8i-11) disengageable at will from a distance leaving the rod (8) connected to the pliers body (1) exclusively through the hinge (9-10)
b) the support rod (8) is connected to the pliers body (1) in such a way as to allow the pliers to turn over rotating around the axis of the conductor (C), when the coupling (8i-11) is disengaged.

The present invention shall now be described more in detail, with reference to a preferred embodiment thereof, given by mere way of example and illustrated on the accompanying drawings, in which:
Fig. 1 is a side elevation, showing the pliers according to the present invention with open jaw;
Fig. 2A is a side elevation, showing a cross-section of the pliers of fig. 1 with closed jaw;
Figs. 2B and 2C are sectional views, similar to fig. 2A, showing two successive steps of release of the pliers; and
Fig. 3 is a side elevation of the same pliers of the previous figures, showing the final step of release.

The pliers of the present invention comprise a body 1, to which there is hinged in 2 a movable jaw 3. In correspondence of the undercut 4 of the body 1 - where the electric conductor C to be short-circuited is meant to be housed - there is provided a hard metal insert 5 having an uneven surface (serrations, ribbings, knurlings, and the like). A similar insert 6 is provided on the inner surface of the movable jaw 3, meant to come in contact with the conductor C when the pliers are in a closed position.

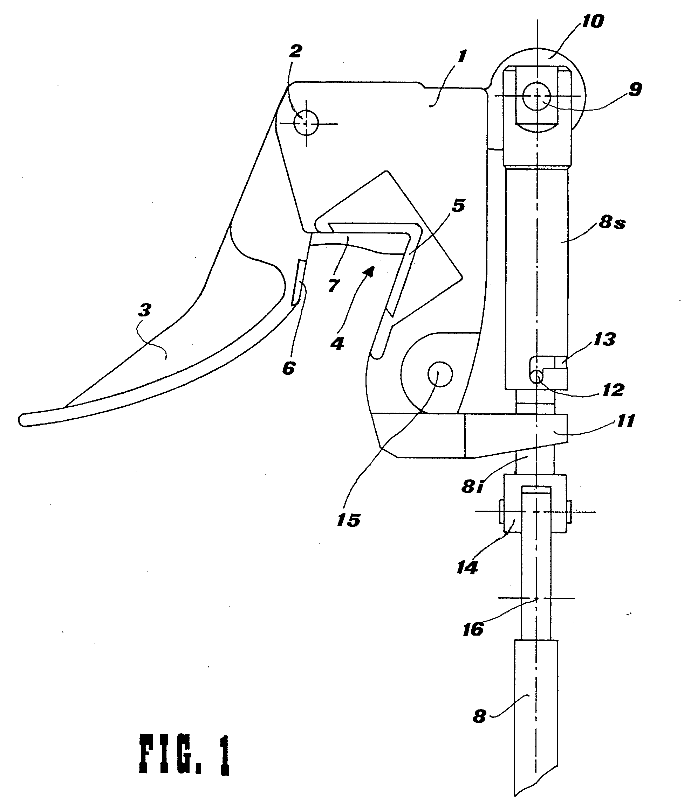

Fig. 1 also shows a release pawl 7, which partially covers the bottom of the undercut 4 and is apt to release a preloaded spring (not shown) positioned inside the body 1, when being pushed into said body 1 by the conductor C as the pliers clamping operation takes place.

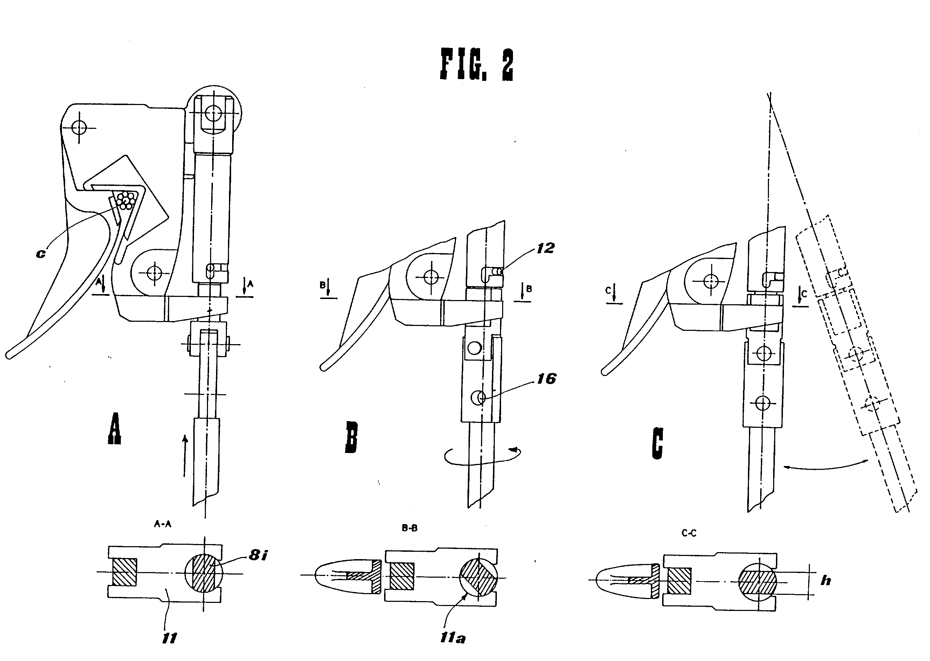

Once the spring has been released by the action of the pawl 7, it causes the snapping of the jaw 3 and the conductor C remains perfectly enclosed and compressed between the metallic surfaces 5 and 6, as shown in fig. 2A. Thanks to the impact effect determined by the snapping of the jaw 3, the knurlings provided on the surfaces 5 and 6 cause the local removal of the oxide layer existing on the conductor, thereby determining a perfect contact between the pliers and the conductor itself.

According to the present invention, it is possible to correctly operate the aforedescribed pliers from the soil - so as to obtain the short-circuiting of an electric conductor - by means of a special telescopic metal rod supporting said pliers. The end portion of said rod substantially comprises two points of connection to the pliers: a first permanent anchorage point, higher than the barycenter of the pliers when the same are in a normal position of use; and a second coupling point, disengageable under remote control, to allow the turnover of the pliers and the subsequent release thereof from the conductor.

In the illustrated embodiment, said support rod 8 is permanently hinged onto the pliers body 1 in correspondence of the pin 9 housed into a tab 10 fixed to and projecting from said body 1. Said tab 10, and thus the pin 9, are positioned so as to be positively above the barycenter of the pliers. The support rod 8 is then further coupled to the pliers body 1 in correspondence of the forked bracket 11 projecting from the lower part of said body 1. In fact - as shown in figs. 2A to 2C - in this point the rod 8 has a barrel-shaped section, apt to engage into the cylindrical cavity 11a of the bracket 11 and to freely rotate therein. Furthermore, the width h of said rod section is inferior to the opening width of the forked bracket 11, so that the rod 8, in a specific angular position, can be freed from said bracket 11.

As said above, the second coupling point (in 11) of the rod 8 to the pliers body 1 is disengageable under control. In the illustrated embodiment, this is obtained by forming the end portion of the rod 8 in two sections 8i and 8s, apt to slide telescopically one into the other and to freely move one in respect of the other, both in an axial and in a circumferential direction. The reciprocal movements of said two sections of the rod 8 are controlled by a pin 12 fixed to the section 8i and freely slidable into a slot 13 formed in the section 8s. A preferred shape of the slot 13 allows a short axial movement of the section 8i into the section 8s and a subsequent rotation by 90° of said section 8i, against the action of a spring (not shown) housed into the rod section 8s.

Furthermore, below the pliers body 1, the support rod 8 comprises an articulated joint 14 allowing a slight lateral oscillation (about 30°) of the pliers body on both sides in respect of the rod axis, so as to facilitate the positioning of said pliers on electric conductors which are inclined in respect of the horizontal plane.

During operation, the rod 8 supporting the pliers of the present invention is mounted - in known manner - at the top of a switch hook of insulating material. At this stage, the pliers are connected to the rod 8 both in 9 and in 11, and are thus positioned as shown in fig. 1.

The pliers are then positioned over the conductor C, so as to embrace the same with their undercut 4, and are subsequently lowered until said conductor comes into contact with the pawl 7, shifting it upwards and thereby causing the snapping of the jaw 3. Said jaw thus closes up, clamping the conductor C, as shown in fig. 2A.

This operation is repeated on all the conductors of the line having to be short-circuited, whereby each conductor is locked into a pair of pliers of the aforedescribed type. At the end of the rod 8, opposite to that supporting the pliers, there is fixed an insulated electric cable; said cable - together with the other similar cables required to short-circuit the whole line - is unwound from a bobbin, grounded in the already described known manner.

The rod section 8i, and thus also the upper part of the joint 14, are preferably made of insulating material, while a flexible electric cable is fixed between the pliers (in 15) and the rod 8 (in 16). This determines a preferential path for the short-circuiting current, which avoids the movable parts of the pliers that could get damaged thereby.

At the end of the operation on the line, when wishing to recover the pliers from the conductor, the operator provides to disengage the pliers from the rod 8, in correspondence of the coupling point 11, so that said rod remains connected to the pliers body 1 only in correspondence of the hingeing point 9-10. This is obtained with a few and simple operations carried out on the rod 8 supporting the pliers. The operator must in fact simply provide, with the help of the switch hook, to push upwards the rod 8 so as to cause its section 8i to partially slide into the section 8s (fig. 2A), and to then cause the rotation of the rod 8 (fig. 2B) by an arc of approximately 90° (fig. 2C).

As clearly illustrated in the sectional views of figs. 2A to 2C, during said rotation, the barrel-shaped section of the rod 8 moves into the position allowing it to be disengaged from the cavity 11a of the forked bracket 11. Having reached the position of fig. 2C, the rod 8 can thus be easily removed from the forked bracket 11 and be carried into the position shown in dashes in fig. 2C.

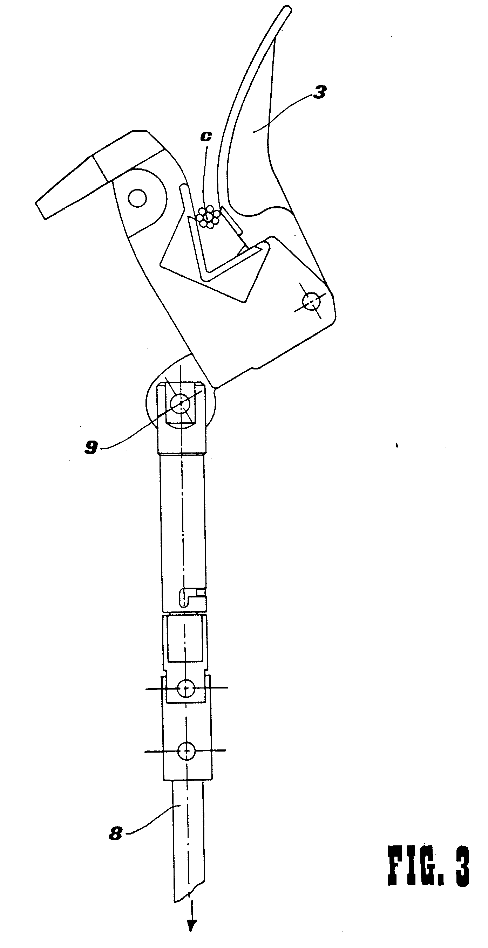

At this stage, the rod 8 is connected to the pliers body 1 exclusively in correspondence of the hingeing point 9-10, and since said point is above the barycenter of the pliers, these latter turn over rotating about the conductor C, from which they can thus be easily released by being simply pulled downward, as shown in fig. 3. Once they are back on the soil, the pliers are reset in their initial working position, by opening the jaw 3 against the action of the inner spring, and are thus ready to be used again.

From the previous description, it appears quite evident that the present invention has fully reached its intended purpose. It in fact provides for pliers comprising an improved clamping and release system, which can be easily and efficiently operated also at a distance, i.e. remotely from the conductor - and, in particular, operated from the soil - without causing any undesired oscillations or displacements of the conductor, since the force is imparted thereon always in a vertical downward direction, without therefore altering its position of natural balance.

The pliers according to the present invention have been described with reference to a particular preferred embodiment thereof, but it is understood that such pliers can also be realized in other different embodiments, all falling within the protection scope of the present invention, such as defined in the enclosed claims.

## Claims

1. Pliers for devices to effect from the ground the short-circuiting and grounding of conductors of overhead electric lines, said pliers comprising a pliers body (1), a movable jaw (3) which closes automatically when bearing against the conductor (C), whereby the clamping of the pliers to the conductor (C) is obtained by a pulling force directed downwards, and further comprising a support rod (8) for supporting the pliers, characterized in that
a) the support rod (8) is connected to the pliers body (1) in at least two points, of which a first point of permanent anchorage consists of a hinge (9-10), at least a second point consists of a coupling (8i-11) disengageable at will from a distance leaving the rod (8) connected to the pliers body (1) exclusively through the hinge (9-10)
b) the support rod (8) is connected to the pliers body (1) in such a way as to allow the pliers to turn over rotating around the axis of the conductor (C), when the coupling (8i-11) is disengaged.

2. Pliers as in claim 1), wherein the disengagement of said coupling is obtained by imparting one or more movements on said support rod (8).

3. Pliers as in claim 1), wherein said first anchorage point is above the barycenter of the pliers, when the same are in in a normal position of use clamping the conductor (C).

4. Pliers as in claim 1), wherein the end portion of the rod (8) is formed in two sections (8i, 8s) sliding telescopically one into the other in opposition to spring means provided into one of said sections (8s).

5. Pliers as in claim 4), wherein the movements of the rod sections (8i, 8s) are controlled by a pin (12) fixed to one of said sections (8i) and cooperating with a slot (13) formed in the other section (8s).

6. Pliers as in claim 1), wherein said coupling is formed between a forked bracket (11) fixed to the pliers body (1), having a cavity (11a) with a partially open circular cross-section, and one of said rod sections (8i), having a barrel-shaped cross-section with a radius equal to that of said cavity (11a) and a width (h) inferior to the opening width of said cavity (11a).

7. Pliers as in claim 5), wherein the disengagement of said coupling is obtained by imparting reciprocal movements on said two rod sections (8i, 8s), according to the path of said pin (12) and slot (13) system.

8. Pliers as in claim 1), comprising moreover an articulated joint (14) allowing the lateral oscillation of the pliers, in respect of the rod (8), by about 30° on both sides.

9. Pliers as in claim 4), wherein at least one of said two rod sections is made of insulating material and the pliers body (1) is electrically connected to the rod (8), by means of a flexible cable, in a position below said insulating rod section.

## Patentansprüche

1. Zange für Geräte zum Bewirken des Kurzschließens und Erdens von Leitern von oberirdischen elektrischen Leitungen vom Boden aus, wobei die Zange einen Zangenkörper (1), eine bewegliche Klaue (3), die sich automatisch schließt, wenn sie gegen den Leiter (C) drückt, wobei die Klemmwirkung der Zange auf den Leiter (C) durch eine nach unten gerichtete Zugkraft ausgeübt wird, und weiter eine Stützstange (8) zum Tragen der Zange aufweist, dadurch gekennzeichnet, daß
a) die Stützstange (8) mit dem Zangenkörper (1) an wenigstens zwei Punkten verbunden ist, wobei der erste Punkt einer bleibenden Verankerung aus einem Gelenk (9-10) besteht, und wenigstens ein zweiter Punkt aus einer Kupplung (8i-11) besteht, die von einem entfernten ort willkürlich lösbar ist, wobei die Stange (8) mit dem Zangenkörper (1) ausschließlich über das Gelenk (9-10) verbunden bleibt,
b) die Stützstange (8) mit dem Zangenkörper (1) derart verbunden ist, daß sie es der Zange erlaubt, sich um die Achse des Leiters (C) drehend umzükippen, wenn die Kupplung (8i-f) gelöst wird.

2. Zange nach Anspruch 1, wobei die Lösung der Kupplung durch Aufbringen einer oder mehrerer Bewegungen auf die Stützstange (8) bewirkt wird.

3. Zange nach Anspruch 1, wobei der erste Verankerungspunkt oberhalb des Schwerpunkts der Zange ist, wenn diese bei dem Klemmen des Leiters (C) in einer normalen Position der Verwendung ist.

4. Zange nach Anspruch 1, wobei der Endabschnitt der Stange (8) in zwei Teilen (8i, 8s) ausgebildet ist, die teleskopisch der eine in dem anderen gegen eine Feder, die in einem der Teile (8s) vorgesehen ist, gleitet.

5. Zange nach Anspruch 4, wobei die Bewegungen der Stangenabschnitte (8i) von einem Stift (12) gesteuert wird, der in einem Teil (i) befestigt ist und mit einem Schlitz (13) zusammenwirkt, der in dem anderen Teil (8s) ausgebildet ist.

6. Zange nach Anspruch 1, wobei die Kupplung zwischen einem gegabelten Träger (11) ausgebildet ist, der an dem Zangenkörper (1) befestigt ist und der eine Höhlung (lla) aufweist, die einen teilweise offenen kreisförmigen Querschnitt hat und einer der Stangenteile (8i) einen tonnenförmigen Querschnitt mit einem Radius hat, der demjenigen der Höhlung (11a) gleich ist und eine Breite (h) hat, die geringer ist als die Öffnungsbreite der Höhlung (11a) ist.

7. Zange nach Anspruch 5, wobei die Lösung der Kupplung durch Aufbringen von Hin- und Herbewegungen auf die beiden Stangenabschnitte (8a, 8s) entsprechend dem Weg des Stift- und Schlitzsystems (12, 13).

8. Zange nach Anspruch 1, weiter mit einem Gelenk (14), das ein lateralesVerschwenken der Zange bezüglich der Stange (8) um 30° zu beiden Seiten erlaubt.

9. Stange nach Anspruch 4, wobei wenigstens eine der beiden stangenteile aus einem Isolationsmaterial besteht und der Stangenkörper (1) über ein flexibles Kabel in einer Position unterhalb des isolierten Stangenabschnitts elektrisch mit der Stange (8) verbunden ist.

## Revendications

1. Pince pour dispositifs permettant, depuis le sol, de court-circuiter et de relier à la terre des conducteurs de lignes électriques aériennes, ladite pince comprenant un corps de pince (1), une mâchoire mobile (3) qui se ferme automatiquement lorsqu'elle porte contre le conducteur (C), de manière que le serrage de la pince sur le conducteur (C) soit obtenu par une force de traction dirigée vers le bas, et comprenant, en outre, une tige de support (8) pour supporter la pince, caractérisée en ce que
a) la tige de support (8) est reliée au corps de pince (1) en au moins deux points, dont un premier point d'ancrage permanent consiste en une articulation (9-10), au moins un deuxième point consiste en un accouplement (8i-11) libérable à volonté, depuis une distance laissant la tige (8) reliée au corps de pince (1) exclusivement via l'articulation (9-10)
b) la tige de support (8) est reliée au corps de pince (1) de manière à permettre à la pince de se retourner par rotation autour de l'axe du conducteur (C), lorsque l'accouplement (8i-11) est libéré.

2. Pince selon la revendication 1, dans laquelle la suppression dudit accouplement est obtenue en appliquant un ou plusieurs mouvements sur ladite tige de support (8).

3. Pince selon la revendication 1, dans laquelle ledit premier point d'ancrage est situé au-dessus du barycentre de la pince, lorsque celle-ci est dans une position normale d'utilisation, serrant le conducteur (C).

4. Pince selon la revendication 1, dans laquelle la portion d'extrémité de la tige (8) est formée en deux sections (8i, 8s) coulissant de manière télescopique l'une dans l'autre à l'encontre d'un moyen de ressort disposé dans l'une (8s) desdites sections.

5. Pince selon la revendication 4, dans laquelle les mouvements des sections de tige (8i, 8s) sont commandés par une goupille (12) fixée à l'une (8i) desdites sections et coopérant avec une fente (13) ménagée dans l'autre (8s) section.

6. Pince selon la revendication 1, dans laquelle ledit accouplement est formé entre une console en fourche (11) fixée au corps de pince (1), comportant une cavité (11a) avec une section transversale circulaire partiellement ouverte, et l'une (8i) desdites sections de tige, ayant une section transversale en forme de cylindre avec un rayon égal à celui de ladite cavité (11a) et une largeur (h) inférieure à la largeur de l'ouverture de ladite cavité (11a).

7. Pince selon la revendication 5, dans laquelle la suppression dudit accouplement est obtenue en appliquant des mouvements réciproques sur lesdites deux sections de tige (8i- 8s), selon la trajectoire dudit système de goupille (12) et de fente (13).

8. Pince selon la revendication 1, comprenant, en outre, un joint articulé (14) permettant le pivotement latéral de la pince, par rapport à la tige (8), sur environ 30° des deux côtés.

9. Pince selon la revendication 4, dans laquelle au moins l'une desdites deux sections de tige est faite d'un matériau isolant et le corps de pince (1) est relié électriquement à la tige (8), au moyen d'un câble flexible, dans une position sous ladite section de tige isolante.
